# EUROPEAN PATENT APPLICATION

(11) **EP 0 613 805 A1**
(43) Date of publication of application: **07.09.1994**
(21) Application number: 93301640.4
(22) Date of filing: 04.03.1993
(51) Int. Cl.: B60R 15/00, F16L 37/02, E03D 5/00

(54) **Recreational vehicle direct sewage system**

(71) Applicant: Miller, Emlyn Robert, Brownhills, West Midlands WS8 7ND (GB)
(72) Inventor: Miller, Emlyn Robert, Brownhills, West Midlands WS8 7ND (GB)

(57) **Abstract**

A flexible hose (5) with two special connectors (6,7) at each end. One end couples to a special ground connection (6) which is attached to the sewer pipe the other end is attached to a special connection (9) on a recreational vehicle for the purpose of directly transmitting effluent or waste liquid from the vehicle to the sewer or septic tank.

## Description

This invention relates to a direct sewage system for recreational vehicles.

With the increasing use of recreational vehicles for leisure persuits, the need arises for a facility capable of directly disposing of the effluent from these vehicles into a sewer - whether they are caravans, motorhomes or long distance coaches.

It therefore falls upon environmentally conscious park owners, motorway services area managers and bus station managers to provide proper facilities for for these vehicles to empty their effluent tanks directly into the sewer. At present no such facilities exist.

According to the present invention there is provided a direct sewage system which comprises a set of special connectors and a length of flexible hose. The connectors are coupled to the caravan, motorhome or coach and to the special sewer connector flange in the ground to allow effluent to pass directly from the vehicle into the sewer.

A specific embodiment of the invention will now be described by way of example with reference to the accompanying drawings in which:-
Figure 1 shows in section the sewer connector flange with a removable plug.
Figure 2 shows in section the sewer connector flange with the flexible hose and connector inserted.
Figure 3 shows in section the flexible hose and the connections to the vehicle.

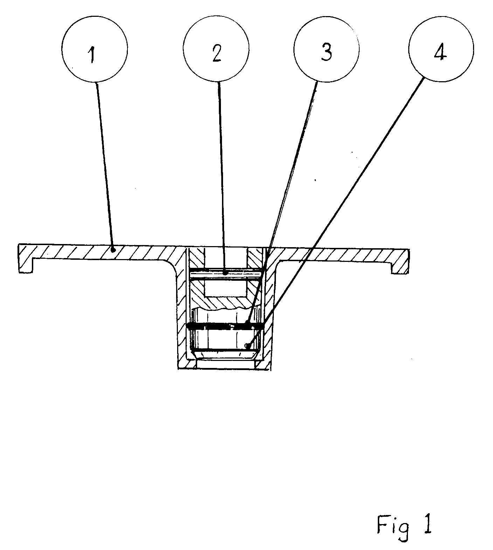

Referring to the drawings when the system is not in use a plug, 4 is inserted in the sewer connector flange, 1 as shown in fig.1, the plug is removed for access to the sewer.

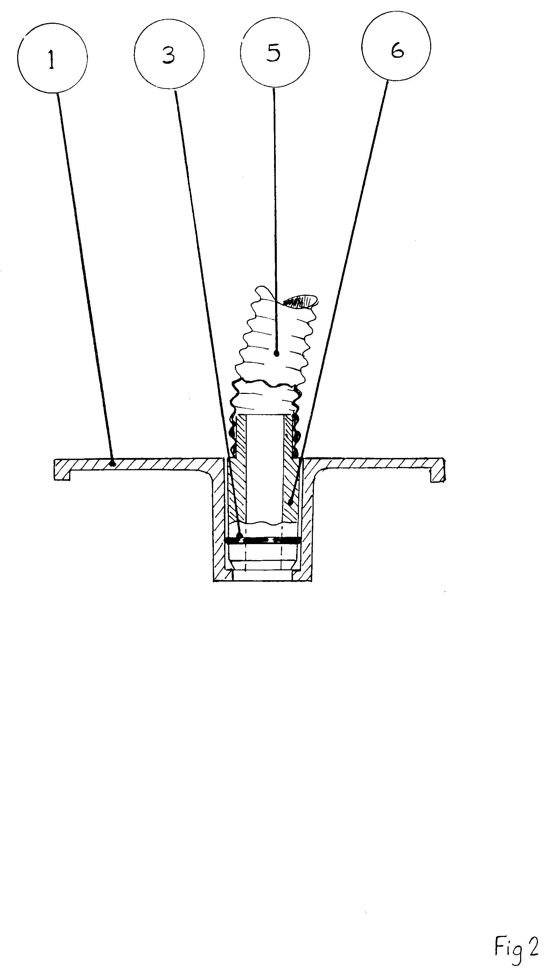

Fig 2 shows the sewer connection coupling 6, inserted in the connector flange 1, the '0' ring 3 seals the coupling and gives a push fit.

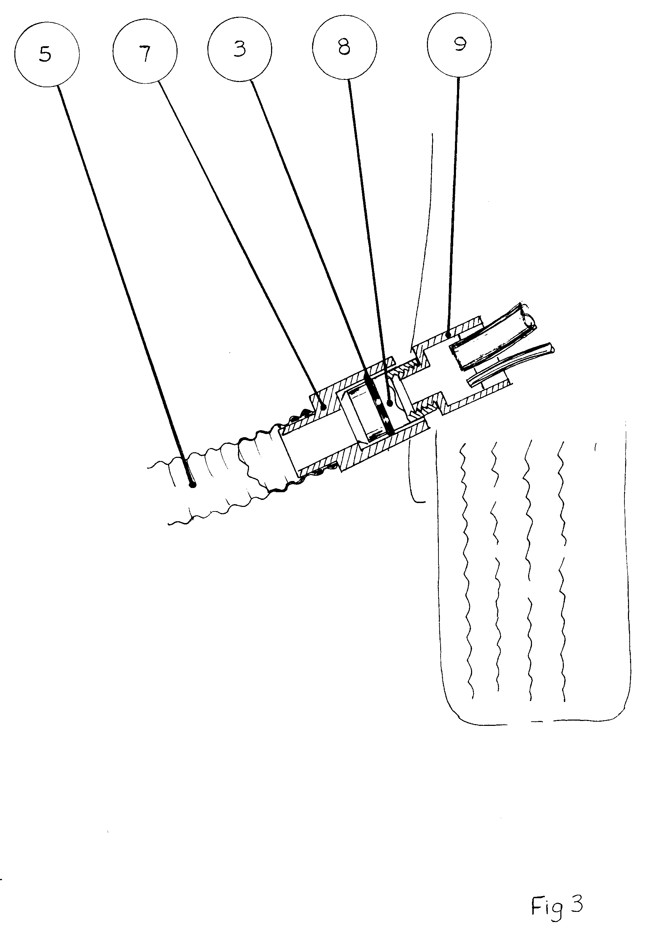

Fig 3 shows the vehicle connection couplings, the coupling 7 is attached to the flexible hose 5 and is pushed on the coupling 8 to complete the link-up between the vehicle and the sewer.

## Claims

1. A direct sewage system for recreational vehicles comprising a cast iron sewage connector flange which is coupled to the main sewer. A length of flexible hose with a push-fit connector at each end connects the effluent outlet of the vehicle directly into the sewer.

2. A direct sewage system as claimed in Claim 1 where waste liquids other than effluent are discharged to the sewer from the vehicle.

3. A direct sewage system as claimed in Claim 1 or Claim 2 where waste is discharged into a septic tank or other than a main sewer.
